Europäisches Patentamt

**European Patent Office**

Office européen des brevets

(11) Publication number:

**0 068 901**
**A1**

(12) # EUROPEAN PATENT APPLICATION

(21) Application number: 82303436.8

(22) Date of filing: 30.06.82

(51) Int. Cl.³: **C 22 B 7/00, C 22 B 21/00,**
**F 27 B 14/14**

(30) Priority: 30.06.81 JP 100611/81

(43) Date of publication of application: 05.01.83
Bulletin 83/1

(84) Designated Contracting States: **AT BE CH DE FR GB IT**
**LI LU NL SE**

(71) Applicant: **MORGANITE CARBON KABUSHIKI KAISHA,**
**3-3,6-chome Tagawa-dori Higashiyodogawa-ku, Osaka**
**(JP)**

(72) Inventor: **Takebe, Shinsaku, 3-3-6 Midorigaoka**
**Toyonaka-shi, Osaka-fu (JP)**

(74) Representative: **Weston, Walter et al, PHILLIPS &**
**LEIGH 7 Staple Inn Holborn, London WC1V 7QF (GB)**

(54) A furnace for melting metal swarf.

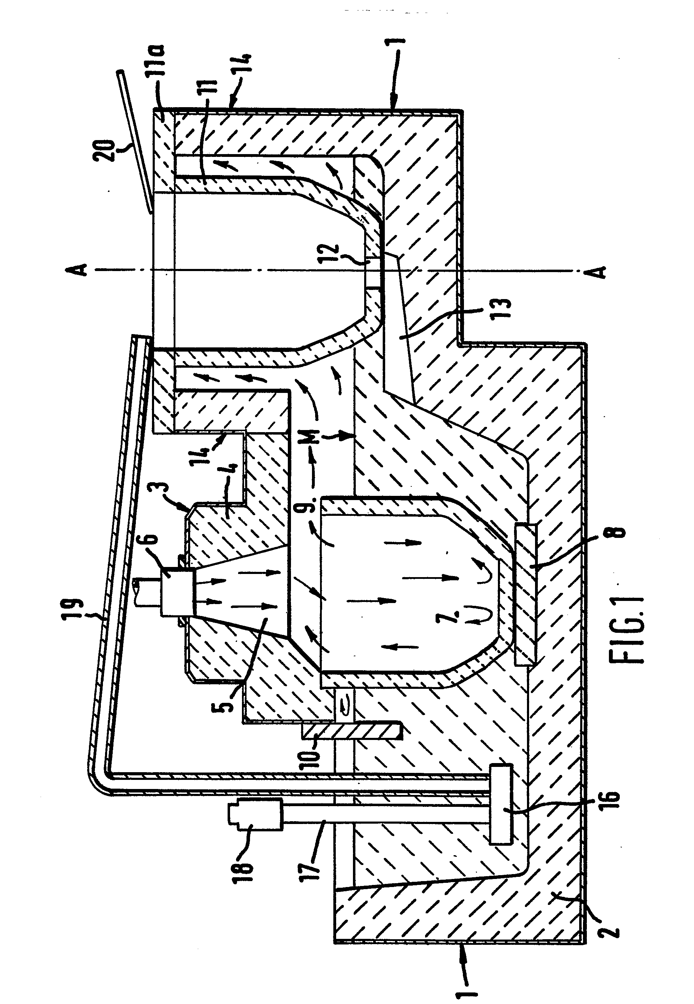

(57) A furnace, for melting metal swarf, comprises a molten metal bath to hold metal up to a given level (M), a first crucible (7) supplied with hot cumbustion gas from a burner (6) so as to serve as an immersion heater for the bath, a second crucible (11) mounted at one side of the bath, with means for feeding metal swarf and molten metal, pumped from the bath, into the second crucible, which has a return channel (12, 13) for molten metal to the bath, a refractory lining of the furnace forming a passage, for hot gas from the mouth of the first crucible to the exterior of and around the second crucible, as a heat-exchange path for control and utilisation of the combustion gas. (Fig. 1)

## A FURNACE FOR MELTING METAL SWARF

This invention relates to furnaces and provides a furnace suitable for melting chips, turnings and similar scrap metal having a high surface to weight ratio, such scrap metal being hereinafter referred to by the generic term swarf.

It is well known that the major problem occurring when swarf is processed by melting for re-use is the rapid oxidation of the metal due to its very high surface to weight ratio which occurs as it is heated to its melting point. To overcome this problem, a system has been developed in which the swarf is melted in a crucible, with a bottom hole, mounted externally from and communicating via its bottom hole with a metal holding furnace, molten metal being pumped from the holding furnace into the crucible where, by means of tangential feeding, it produces a very strong vortex and instantly submerges the swarf as it is fed into the externally mounted crucible. In this way the period of time in which the swarf is exposed to high temperatures and therefore high oxidation rates is minimised.

It is the object of the present invention to provide an integrated swarf melting system in which not only is the loss of metal through oxidation minimised, but also the thermal efficiency of the process is maximised.

According to the present invention, a furnace for melting metal swarf comprises a refractory lined bath for holding molten metal up to a predetermined level, one or more burners supplying a stream of hot combustion gas to heat either directly or indirectly the metal in the said refractory bath and maintain it in a molten state, an open-mouthed refractory vessel, into which metal swarf can be fed, mounted to extend above the normal operating level of the molten metal in the said refractory bath and communicating at its bottom end with the molten metal in the said refractory bath, and a pump arranged to pump molten metal from the said refractory bath and feed it tangentially into the top of the said open-mouthed vessel, characterised in that the said open-mouthed vessel is mounted in the stream of hot combustion gas exhausting from the heating system of the said refractory bath.

The furnace of the present invention is suitable for use with most non-ferrous metals and is particularly suitable for use with aluminium and magnesium metals and their alloys.

The thermal efficiency is improved over known systems because the exhaust gases from the refractory bath, instead of being vented to atmosphere, are used to heat the swarf melting vessel. In this way, the efficiency of the swarf melting process is increased because instead of the vessel losing heat through its walls to the atmosphere, this heat flow is neutralised or may even be reversed.

Whilst it is envisaged that most types of metal melting furnaces which use gas or fuel oil burners as heat sources could be adapted into furnaces according to the present invention, it is believed that the most suitable furnace for use as a basis of the present invention is the type known as the Immersed Crucible furnace, the subject of Japanese Patent No. 746046 which is manufactured and sold in Japan by Morganite Carbon K.K. (corresponding U.K. Patent No. 1 201 119 and U.S.A. Patent No. 28 382, Re-issue of No. 3 635 457.)

The invention is illustrated, by way of example, on the accompanying drawings, in which:-

Fig. 1 is a longitudinal section through the furnace, and

Fig. 2 is a cross-section on line A-A of Fig. 1.

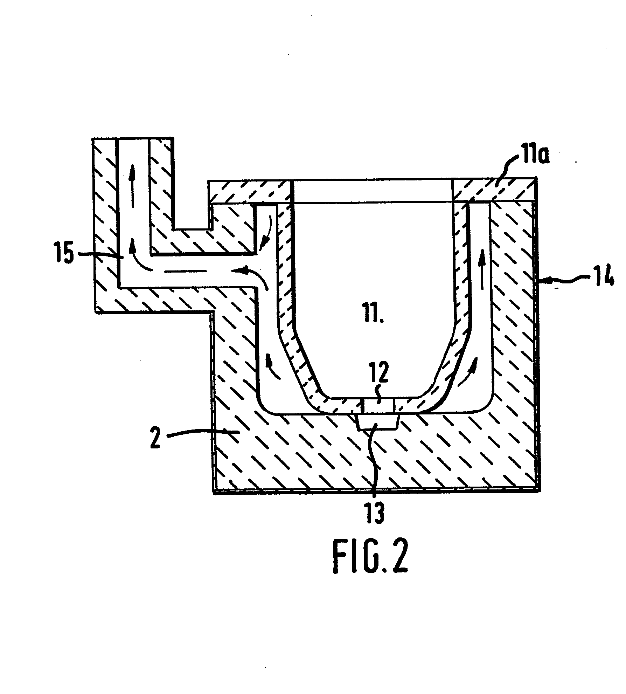

The furnace illustrated by Figs. 1 and 2 comprises a bath consisting of a metal casing 1 which is normally of welded metal construction having a refractory insulating lining 2. This lining preferably consists of two or more layers (not shown) the outer layer being of thermally insulating refractory material and the inner layer being of a refractory material resistant to attack by molten metal such as a cast-in-place refractory which provides a continuous inner lining.

The top of the bath is closed by a metal cover 3 having a refractory lining 4 of similar construction to lining 2.

Above the centre of the bath the inner lining 4 of the cover embodies a downwardly-directed nozzle 5 for a high velocity stream of hot gas from a suitable high pressure gas-air/oil-air burner 6 mounted in the cover 3. the nozzle directing the stream of hot gas (indicated by arrows) into a cup-shaped refractory vessel 7 mounted on a plinth 8 in the bottom of the bath. The cup-shaped refractory vessel is preferably a commercially available metal-melting crucible made from clay-graphite or other suitable highly refractory heat conductive material.

The vessel 7 is of such a size that it has a surrounding clearance from the wall of the bath, to provide space for molten metal, and the mouth of the vessel 7 is open above the metal level M and is sealed against the lining 4 around 180° of its circumference. The unsealed area and a recessed section of the lining 4 define an opening 9 through which the hot gases can exhaust from the vessel 7 over the surface of the molten metal. A downwardly depending weir 10 extending below the surface of the molten metal seals the gases from the open end of the furnace.

A second vessel 11 is mounted at one side of the furnace, with its lower end extending into the molten metal. A hole 12 in the bottom of the vessel 11 communicates with the main body of the bath by channel 13 in the refractory lining 2.

The vessel 11 is surrounded by a metal casing 14 joined to the main bath casing 1 and lined with a continuation of the bath lining 2. At its upper end, the vessel 11 is sealed by a refractory lined annular lid 11a. There is an annular clearance between the vessel 11 and the lining 2 creating a passage through which the hot gases can pass around the vessel 11 to heat it before being exhausted through an exhaust port 15 in the casing 14.

The vessel 11 is suitably also a commercially

0068901

available metal melting crucible of the same or similar type as the vessel 7 and having the hole 12 cut in its bottom.

A liquid metal pumping system arranged in the open well of the bath comprises a submerged liquid metal pump 16, suitably of carbon or other refractory material, driven by a shaft 17 from a pneumatic or electric motor 18 mounted above the liquid metal level. A refractory lined metal pipe 19 conveys pumped metal from the bath 1 into vessel 11 where it is fed as a stream tangential to the inner wall of the vessel. Particularly suitable metal pumping systems are the "METAULLICS" (trade mark) pumps manufactured by the Metaullics Systems Division of Kennecott Corporation, U.S.A.

Metal swarf can be fed into vessel 11 by a conveyor, indicated as 20. In operation, the burner 6 is ignited and the furnace charged with molten metal either from a separate metal-melting furnace or by charging solid metal. Once the working molten metal level M has been reached, the pump 16 is started and molten metal pumped through the pipe 19 to the vessel 11 and thence through the hole 12 and channel 13 back into bath 2. The tangential feed of molten metal into vessel 11 creates a strong metal vortex into which a continuous stream of metal swarf can be fed in the opposite direction against the vortex flow through the open mouth of vessel 11. The swarf is instantly submerged in molten metal and thus has virtually no time for oxidation in the ambient high temperature atmosphere.

The hot gas stream, passing from the vessel 7 which acts as a submerged immersion heating vessel, supplies further heat to the molten metal by heating both the upper lining 4, so that it acts as a radiant heater, and by heating the surface of the molten metal over which it passes. The hot gas stream then flows around vessel 11 where it raises the temperature of the molten metal vortex and increases the efficiency of the swarf melting process.

In an optional embodiment, the gas stream, after exhausting from the exhaust port 15, can be used to pre-heat the incoming swarf, provided that its temperature is reduced to below 300°C to minimise oxidation.

Whilst the invention has been described with particular reference to an Immersed Crucible furnace, it is envisaged that the invention could equally be applied to immersion tube heated furnaces or reverbatory furnaces by encasing the swarf melting vessel and feeding hot exhaust gases into the casing to heat the vessel.

CLAIMS

1.    A furnace, for melting metal swarf, comprising a refractory lined bath for holding molten metal up to a predetermined level, one or more burners supplying a stream of hot combustion gas to heat either directly or indirectly the metal in the said refractory bath and maintain it in a molten state, an open-mouthed refractory vessel into which metal swarf can be fed mounted to extend above the normal operating level of the molten metal in the said refractory bath and communicating at its bottom end with the molten metal in the said refractory bath, and a pump arranged to pump molten metal from the said refractory bath and feed it tangentially into the top of the said open-mouthed vessel, characterised in that the said open-mouthed vessel is mounted in the stream of hot combustion gas exhausting from the heating system of the said refractory bath.

2.    A furnace, for melting metal swarf, comprising a bath for holding molten metal up to a given level, a first crucible mounted in the bath with an open mouth above the metal level, a burner arranged to direct hot combustion gas into the mouth of the crucible which serves as an immersion heater for metal in the bath, a second crucible mounted at one side of the bath to extend above the metal level and having an outlet for metal to flow from the second crucible to the bath, means for feeding into the second crucible metal swarf and molten metal pumped from the bath to submerge metal swarf as it is fed into the second crucible, and a refractory furnace lining defining a passage for hot gas from the mouth of the first crucible to the exterior of and around the second crucible, whereby the interior of the first crucible, the said passage and the exterior of the second crucible form an enclosed heat-exchange path for control and utilisation of the combustion gas from the burner, into and from the first crucible and to and around the second crucible.

0068901

FIG.1

0068901

FIG.2

0068901

European Patent Office

**EUROPEAN SEARCH REPORT**

Application number

EP 82 30 3436

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 007 036 (GOTTSCHOL et al.) <br> * the whole document * | 1,2 | C 22 B 7/00 <br> C 22 B 21/00 <br> F 27 B 14/14 |
| Y | US-A-3 770 420 (SPEAR et al.) <br> * abstract; claims, figure 1 * | 1,2 | |
| Y | CH-A- 118 766 (KIENE) <br> * figures; claims * | 1,2 | |
| Y | US-A-2 465 545 (K. MARSH) <br> * figures; claims * | 1,2 | |
| Y,D | US-E- 28 382 (KING) <br> * figures; claims * | 2 | |
| A | DE-A-1 458 171 (NORTH AMERICAN) | | **TECHNICAL FIELDS SEARCHED (Int. Cl. ³)** |
| A | US-A-3 933 343 (RAWLINGS) <br><br> ----- | | C 21 B <br> C 22 B <br> F 27 B <br> F 27 D |

The present search report has been drawn up for all claims

| Place of search | Date of completion of the search | Examiner |
|---|---|---|
| THE HAGUE | 15-09-1982 | OBERWALLENEY R.P.L.I |